# EUROPEAN PATENT APPLICATION

(11) **EP 4 415 166 A1**
(43) Date of publication of application: **14.08.2024**
(21) Application number: 24154606.8
(22) Date of filing: 30.01.2024
(51) Int. Cl.: H01Q 1/27, G02B 27/01, H01Q 21/28, H01Q 21/10, H01Q 21/12

(54) **APPARATUS AND METHOD**

(30) Priority: 10.02.2023 GB 202301956
(71) Applicant: Nokia Technologies Oy, 02610 Espoo (FI)
(72) Inventor: SVENDSEN, Simon, Aalborg (DK); CAPORAL DEL BARRIO, Samantha, Aalborg (DK)
(74) Representative: Nokia EPO representatives

(57) **Abstract**

There is provided an eyewear device comprising: an antenna array comprising at least two antenna elements which are arranged along a first axis, the first axis being substantially perpendicular to a second axis of the eyewear device, wherein when in use, the second axis is parallel to a line passing through a centre of both eyes of a wearer of the eyewear device.

## Description

### FIELD

The present disclosure relates to an apparatus and a method. By way of example only, the present disclosure relates to an eyewear device having an antenna array and a method for controlling an antenna array of the eyewear device.

### BACKGROUND

Extended Reality (XR) may require one or more devices. One example of an XR device is an eyewear device.

XR is an umbrella term for the following 3 types of reality:
Augmented Reality (AR) where virtual objects are added to real world environments;
Virtual Reality (VR) where visual and audio scenes are combined with real-world locations; and
Mixed Reality (MR) where haptics and interactions are added.

### SUMMARY

According to an aspect, there is provided an eyewear device comprising: an antenna array comprising at least two antenna elements which are arranged along a first axis, the first axis being substantially perpendicular to a second axis of the eyewear device, wherein when in use, the second axis is parallel to a line passing through a centre of both eyes of a wearer of the eyewear device.

The number of antenna elements may be four antenna elements.

The antenna array may operate in the millimetre wave frequencies.

A linear axis of each of the antenna elements may extend along the first axis.

A linear axis of each of the antenna elements may be arranged parallel to one another.

Each antenna element may be a monopole.

Each antenna element may be a patch antenna element.

Each antenna element may be a dipole antenna element.

The antenna elements may be integrated into a printed circuit board.

The eyewear device may comprise control apparatus, said control apparatus configured to control which one or more of the antenna elements are active.

The control apparatus may be configured to determine which one or more of the antenna elements is to be active based on signal quality.

The signal quality may be one or more of reference signal received power, signal to interference and noise ratio, or reference signal received quality.

The control apparatus may be configured to reduce the number of active antenna elements in response to a reduction in signal quality.

The control apparatus may be configured to reduce the number of active antenna elements only when a timing advance value is below a timing advance threshold value.

The control apparatus may be configured to select which of the antenna elements is active based on a delay difference between at least two of the antenna elements.

The control apparatus may be configured to select which of the antenna elements is active based on a delay difference between antenna elements at each end of the antenna array.

The eyewear device may comprise a head mounted display or eyeglasses.

The eyeglasses have a frame and first and second arms mounted to opposite side edges of the frame, the antenna array being mounted on one of the side edges of the frame.

According to another aspect, there is provided method of controlling the antenna array of the eyewear device described previously, the method comprising: determining based on signal quality which one or more of the antenna elements is to be active.

The signal quality may be one or more of reference signal received power, signal to interference noise ratio, or reference signal received quality.

The method may comprise determining that the signal quality is reduced and in response reducing a number of active antenna elements in the antenna array.

The method may comprise reducing the number of active antenna elements only when a timing advance value is determined to be below a timing advance threshold value.

The method may comprise selecting which of the antenna elements is active based on a delay difference between at least two of the antenna elements.

The method may comprise selecting which of the antenna elements is active based on a delay difference between the antenna elements at each end of the antenna array.

The method may comprise determining that the signal quality is reduced and in response reducing a number of active antenna elements in the antenna array.

The method may comprise determining that a number of active antenna elements in the antenna array is to be increased.

The method may comprise determining that a plurality of the plurality of antenna elements receive a same reference signal at a same time and determining that a number of active antenna elements in the antenna array is to be increased.

The method may comprise determining that a signal quality reduction is less than a threshold amount and in response determining that a number of active antenna elements in the antenna array is to be increased.

The method may comprise determining that a timing advance value is above a timing advance threshold value and in response determining that a number of active antenna elements in the antenna array is to be increased.

A method of controlling an antenna array having a plurality of antenna elements, the method comprising: determining based on signal quality which one or more of the antenna elements is to be active.

The antenna array may comprise at least two antenna elements which are arranged along a first axis.

The number of antenna elements may be four antenna elements.

The antenna array may operate in the millimetre wave frequencies.

A linear axis of each of the antenna elements may extend along the first axis.

A linear axis of each of the antenna elements may be arranged parallel to one another.

Each antenna element may be a monopole.

Each antenna element may be a patch antenna element.

Each antenna element may be a dipole antenna element.

The antenna elements may be integrated into a printed circuit board.

The signal quality may be one or more of reference signal received power, signal to interference noise ratio, or reference signal received quality .

The method may comprise determining that the signal quality is reduced and in response reducing a number of active antenna elements in the antenna array.

The method may comprise reducing the number of active antenna elements only when a timing advance value is determined to be below a timing advance threshold value.

The method may comprise selecting which of the antenna elements is active based on a delay difference between at least two of the antenna elements.

The method may comprise selecting which of the antenna elements is active based on a delay difference between the antenna elements at each end of the antenna array.

The method may comprise determining that the signal quality is reduced and in response reducing a number of active antenna elements in the antenna array.

The method may comprise determining that a number of active antenna elements in the antenna array is to be increased.

The method may comprise determining that a plurality of the plurality of antenna elements receive a same reference signal at a same time and determining that a number of active antenna elements in the antenna array is to be increased.

The method may comprise determining that a signal quality reduction is less than a threshold amount and in response determining that a number of active antenna elements in the antenna array is to be increased.

The method may comprise determining that a timing advance value is above a timing advance threshold value and in response determining that a number of active antenna elements in the antenna array is to be increased.

According to another aspect, there is provided apparatus for controlling an antenna array having a plurality of antenna elements, the apparatus comprising: means for determining based on signal quality which one or more of the antenna elements is to be active.

The apparatus may comprise the antenna array.

The antenna array may comprise at least two antenna elements which are arranged along a first axis.

The number of antenna elements may be four antenna elements.

The antenna array may operate in the millimetre wave frequencies.

A linear axis of each of the antenna elements may extend along the first axis.

A linear axis of each of the antenna elements may be arranged parallel to one another.

Each antenna element may be a monopole.

Each antenna element may be a patch antenna element.

Each antenna element may be a dipole antenna element.

The antenna elements may be integrated into a printed circuit board.

The signal quality may be one or more of reference signal received power, signal to interference noise ratio, or reference signal received quality .

The apparatus may comprise means for determining that the signal quality is reduced and in response reducing a number of active antenna elements in the antenna array.

The apparatus may comprise means for reducing the number of active antenna elements only when a timing advance value is determined to be below a timing advance threshold value.

The apparatus may comprise means for selecting which of the antenna elements is active based on a delay difference between at least two of the antenna elements.

The apparatus may comprise means for selecting which of the antenna elements is active based on a delay difference between the antenna elements at each end of the antenna array.

The apparatus may comprise means for determining that the signal quality is reduced and in response reducing a number of active antenna elements in the antenna array.

The apparatus may comprise means for determining that a number of active antenna elements in the antenna array is to be increased.

The apparatus may comprise means for determining that a plurality of the plurality of antenna elements receive a same reference signal at a same time and determining that a number of active antenna elements in the antenna array is to be increased.

The apparatus may comprise means for determining that a signal quality reduction is less than a threshold amount and in response determining that a number of active antenna elements in the antenna array is to be increased.

The apparatus may comprise means for determining that a timing advance value is above a timing advance threshold value and in response determining that a number of active antenna elements in the antenna array is to be increased.

According to another aspect, there is provided apparatus for controlling an antenna array having a plurality of antenna elements, According to an aspect, there is provided an apparatus comprising at least one processor and at least one memory storing instructions that, when executed by the at least one processor, cause the apparatus at least to: determine based on signal quality which one or more antenna elements of an antenna array is to be active.

The apparatus may comprise the antenna array.

The antenna array may comprise at least two antenna elements which are arranged along a first axis.

The number of antenna elements may be four antenna elements.

The antenna array may operate in the millimetre wave frequencies.

A linear axis of each of the antenna elements may extend along the first axis.

A linear axis of each of the antenna elements may be arranged parallel to one another.

Each antenna element may be a monopole.

Each antenna element may be a patch antenna element.

Each antenna element may be a dipole antenna element.

The antenna elements may be integrated into a printed circuit board.

The signal quality may be one or more of reference signal received power, signal to interference noise ratio, or reference signal received quality .

The at least one processor may be configured to cause the apparatus to determine that the signal quality is reduced and in response reducing a number of active antenna elements in the antenna array.

The at least one processor may be configured to cause the apparatus to reduce the number of active antenna elements only when a timing advance value is determined to be below a timing advance threshold value.

The at least one processor may be configured to cause the apparatus to select which of the antenna elements is active based on a delay difference between at least two of the antenna elements.

The at least one processor may be configured to cause the apparatus to select which of the antenna elements is active based on a delay difference between the antenna elements at each end of the antenna array.

The at least one processor may be configured to cause the apparatus to determine that the signal quality is reduced and in response reducing a number of active antenna elements in the antenna array.

The at least one processor may be configured to cause the apparatus to determine that a number of active antenna elements in the antenna array is to be increased.

The at least one processor may be configured to cause the apparatus to determine that a plurality of the plurality of antenna elements receive a same reference signal at a same time and determining that a number of active antenna elements in the antenna array is to be increased.

The at least one processor may be configured to cause the apparatus to determine that a signal quality reduction is less than a threshold amount and in response determining that a number of active antenna elements in the antenna array is to be increased.

The at least one processor may be configured to cause the apparatus to determine that a timing advance value is above a timing advance threshold value and in response determine that a number of active antenna elements in the antenna array is to be increased.

The apparatus may be provided in an eyewear device.

According to a further aspect, there is provided a computer program comprising instructions, which when executed by an apparatus, cause the apparatus to perform any of the methods set out previously.

According to a further aspect, there is provided a computer program comprising instructions, which when executed cause any of the methods set out previously to be performed.

According to an aspect there is provided a computer program comprising computer executable code which when cause any of the methods set out previously to be performed.

According to an aspect, there is provided a computer readable medium comprising program instructions stored thereon for performing at least one of the above methods.

According to an aspect, there is provided a non-transitory computer readable medium comprising program instructions which when executed by an apparatus, cause the apparatus to perform any of the methods set out previously.

According to an aspect, there is provided a non-transitory computer readable medium comprising program instructions which when executed cause any of the methods set out previously to be performed.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

### DESCRIPTION OF FIGURES

Some examples will now be described in further detail, by way of illustration only, with reference to the accompanying drawings, in which:
Figure 1 shows a representation of a network system according to some example embodiments;
Figure 2 shows a representation of a control apparatus according to some example embodiments;
Figure 3 shows schematically the head of a user wearing eyewear device;
Figure 4 shows a first antenna array provided on a side of an eyewear device;
Figure 5 shows a second antenna array provided on a front of eyewear device;
Figure 6a schematically shows radiation pattern when viewed from the front of a user wearing the eyewear device;
Figure 6b show the same radiation pattern as shown in Figure 6a but viewed from above the user's head.
Figure 7a shows a first example of an antenna array;
Figure 7b shows a second example of an antenna array;
Figure 8a shows a radiation pattern when all of the antenna elements of the array are active;
Figure 8b shows a radiation pattern where two antenna elements are active;
Figure 8c shows a radiation pattern where only one antenna element from the center of the array is active;
Figure 8d shows a radiation pattern when only the uppermost antenna is activated;
Figure 8e shows a radiation pattern when only the lowermost antenna is activated;
Figure 9 shows a base station in the azimuthal plane and a roof mounted wireless access node;
Figure 10 shows a method of some embodiments;
Figure 11 shows another method of some embodiments;
Figure 12 shows a radio frequency (RF) module;
Figure 13 shows a RF module used in some embodiments;
Figure 14a shows an eyewear device of one embodiment;
Figure 14b shows eyewear device of another embodiment;
Figure 14c shows eyewear device of yet another embodiment; and
Figure 15 shows a method of some embodiments

### DETAILED DESCRIPTION

Some embodiments relate to an eyewear device.

The eyewear device may be an extended reality (XR) device. For example, a user may wear the eyewear device on their head. The eyewear device may be in the form of glasses or head mounted displays (HMD). For example, glasses may be used with AR or MR. Glasses may be used with VR. HMDs may be used with VR. HMDs may be used with AR or MR.

The eyewear device may need to receive signals from a base station or access point. The eyewear device may need to transmit signals to a base station or access point. As such the eyewear device may be considered to be a user equipment (UE) or at least incorporate a UE function from a mobile communications perspective. As such, it should be appreciated that all of the required UE functions may be provided by the eyewear device in some embodiments. In other embodiments, only part of the required UE functions may be provided by the eyewear device with other of the functions being provided by a separate connected device.

It should be appreciated that the example embodiments will be described in relation to eyewear devices such as XR devices. However, other embodiments may be used with any eyewear device required to communicate with a base station or an access point and/or another eyewear device or any other electronic device (portable or non-portable).

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

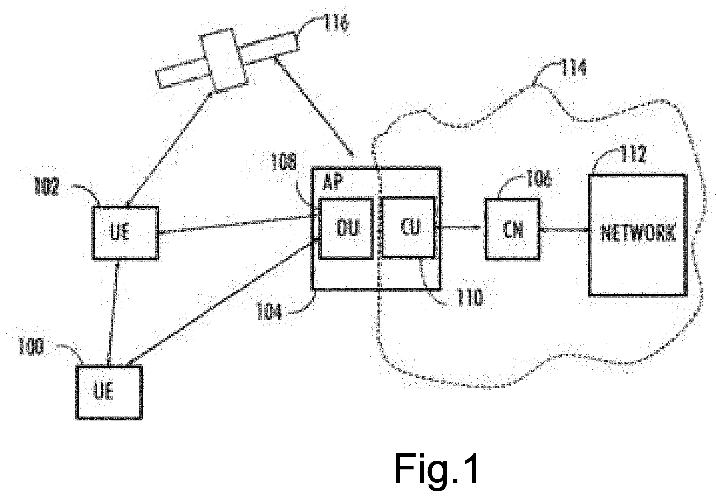

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows devices 100 and 102. (As will be discussed in more detail, one or more of the devices may be provided by an eyewear device). The devices 100 and 102 are configured to be in a wireless connection on one or more communication channels with a node 104. The node 104 is further connected to a core network 106. In one example, the node 104 may be an access node such as (e/g)NodeB serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

With an eyewear device such as a XR device or eyeglasses, the communication may be primarily via the downlink, depending on the application.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes radio links to devices. The antenna unit may comprise a plurality of antennas or antenna elements. The (e/g)NodeB is further connected to the core network 106 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one or more external packet data networks, and to a mobile management entity (MME) or access mobility management function (AMF), for controlling access and mobility of the devices.

The device may also utilise cloud. In some applications, a device may comprise a user portable device (such as eyeglasses) with radio parts and the computation is carried out in the cloud.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control).

5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave).

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at or close to a remote antenna site (in a distributed unit, DU 108) and non-real time functions being carried out in a centralized manner (in a centralized unit, CU 110).

5G may also utilize satellite communication to enhance or complement the coverage of 5G service, for example by providing backhauling. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have access to a plurality of radio cells and the system may comprise also other apparatuses, such as physical layer relay nodes or other network elements, etc..

Although the apparatuses have been described as one entity, different modules and memory may be implemented in one or more physical or logical entities.

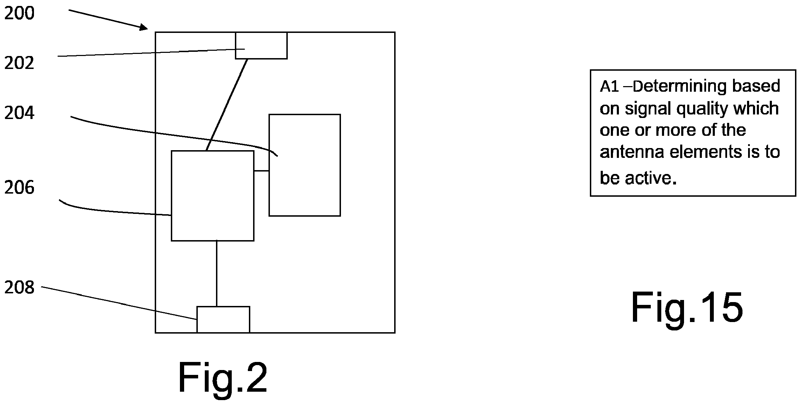

Figure 2 illustrates an example of a control apparatus 200. The control apparatus may be provided on the eyewear device. Alternatively, the control apparatus, or part of the control apparatus, may be provided separately from the eyewear device. The control apparatus may comprise at least one memory 204 and at least one processor 206. The at least one memory may comprise at least one random access memory RAM and/or at least on read only memory ROM. The at least one processor may be coupled to the at least one memory. The at least one processor may be configured to execute an appropriate software code. The software code may for example allow to perform one or more steps to perform one or more of the present aspects. The software code may be stored in the memory such as in a ROM.

The control apparatus may comprise or be connected to transceiver apparatus. The transceiver apparatus may have an antenna array for receiving and/or transmitting signals. In Figure 2, the transceiver apparatus is designated schematically by block 202. The transceiver apparatus 202 may have a radio part for converting the signals received from the at least one processor to the required transmitting frequency for transmitting by the antenna array. The transceiver apparatus 202 may have a baseband part for converting the signals received by the antenna array to the baseband frequency for processing by the at least one processor (via the radio part).

The at least one processor may be configured to provide a display output which is provided to a display interface. The display may be integrated in the eyeglasses or extended reality device.

The at least one processor may be configured to provide an audio output which is provided to an audio device interface. The audio device may be integrated in the eyeglasses or extended reality device.

Some embodiments relate eyewear devices which wirelessly communicate with base stations or access nodes.

Some XR use cases may be relatively DL-heavy. For example, for VR and CG (cloud gaming), the downlink provides high-resolution video in DL (e.g. 30-45Mbps per device). The uplink may be for example, 100 bits/s per UE. As such, one TDD (time division duplex) configuration agreed for the XR SI (XR safety initiative), (e.g. DDDSU-where D is a downlink subframe, U is an uplink subframe and S is a special subframe where there is a transition from a downlink subframe to an uplink subframe) is DL-limited in terms of capacity. For example: 3-7 XR devices may be supported in DL versus 40 or more other types of UEs (such as mobile phones) in UL, if only XR devices are present.

The beam management may be downlink based. DL slots are reserved for DL reference signals (RS) for beam alignment, beam tracking, and/or the like for both gNB and XR device. Therefore, the DL capacity may be limited due to fewer occasions to schedule data in order to ensure beam alignment.

With XR devices, beam alignment should be optimized in order to provide a maximum beam gain, and thus throughput. However, with XR devices e.g. glasses or the like which are worn on the head, the movements may be very sudden and frequent. This could require many RS to ensure optimum beam alignment. As such, beam steering directly impacts DL resources dedicated to beam management and hence DL achievable throughput.

Moreover, frequent beam alignment may induce a higher risk of DL beam failures. This may impact latency, throughput, and/or limit mobility.

Regarding the UL, having an antenna array being close to the head means that the Maximum Permissible Exposure (MPE) FCC (Federal Communications Commission) regulations may limit the maximum allowed transmission power. This may limit the UE range, reduce UL throughput, and/or potentially lead to UL failures. The MPE FCC regulations apply to the US. Other countries may have similar regulations.

Some embodiments aim to address issues relating to DL resources spent on beam steering.

Some embodiments aim to address issues relating to failures due to sudden and fast head rotation (compared to beam tracking).

Some embodiments aim to address issues relating to MPE or similar power restrictions.

Some embodiments provide a method for the placement and orientation of an antenna array for an XR device or eyeglasses.

The MPE effects may be mitigated (thus enabling the device to send a higher maximum power).

Some embodiments do not require beam switching.

The antenna array may be a mmWave antenna array. The antenna array may work with 5G wavelengths.

Some embodiments are provided to work with mmWaves.
mmWaves refers to frequencies between 24GHz and 300GHz. Some embodiments are provided to work within this range.
mmWaves in the lower end of that range (24GHz to 100GHz) are being currently considered for use in mobile networks. Some embodiments are provided to work within this range.

The mmWaves may be in the frequency range of 24 GHz to 71 GHz. Some embodiments are provided to work within this range.

Currently, the 5G standards define a first frequency range of 24.25 GHz to 52.6 GHz and a second frequency range of 52.6 GHz to 71.0 GHz. Some embodiments may be provided to work with one or the other or both of these frequency ranges.

In one embodiment, the antenna array may be a 28GHz antenna array.

Other embodiments may work outside these frequencies. Some embodiments may operate at lower frequencies such as the 7GHz band.

The available volume in the glass frame next to the lenses may be limited. In that case, the antenna array may be only applicable for frequencies with a wavelength lower than approximately half of the length available for the antenna array.

In some embodiments, the eyewear device does not need to switch beams on the active panel so no beam steering is required. In some embodiments, it will rather switch the active panel from one to another.

This may be reflected in UE capability signalling standard TS38.306 of 3GPP or similar standard, where the UE will set the maximum number of receive beams equal to the number of antenna panels. The eyewear device may be regarded as being a UE or incorporating a UE in this scenario. The UE in this example may send a message to the base station which comprises information indicating the maximum number of receive beams or the number of antenna panels. In some embodiments, the UE may provide information to the base station which provides antenna mode information. This antenna mode information may indicate that the UE uses beam switching rather than beam steering.

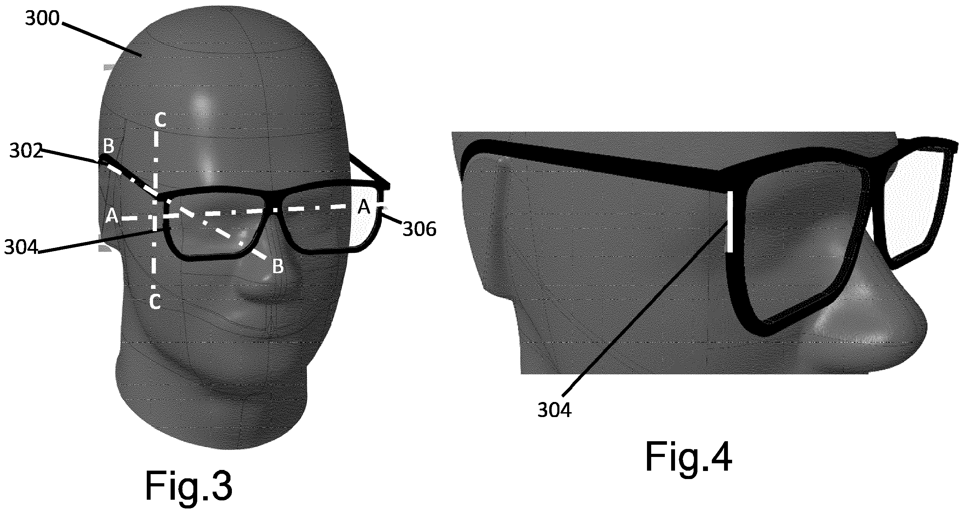

Reference is made to Figure 3 which shows schematically the head 300 of a user. In this example, the user is wearing eyeglasses 302. The eyeglasses may be an XR device or other eyeglasses. In the example shown in Figure 3, a first antenna array 304 is provided on one side of the glasses and a second antenna array 306 is provided on the other side of the glasses.

As shown in Figure 3, a first axis A-A is shown. The first axis is a line through the front of the eyeglasses parallel to a line passing through the middle of the wearer's eyes. A second axis B-B is shown. The second axis extends in a direction perpendicular to that of the first axis and passes along the side of the user's head. The second axis may pass through an upper region where the ear joins the head. This axis may correspond to longitudinal axis of an arm of the eyeglasses. A third axis C-C is shown which extends in a direction which is generally perpendicular to the first and the second axes. This axis is generally vertical when the user is wearing the eyeglasses and the head is pointing directly forwards - that is generally upright and not tilted up or down. This axis is generally parallel to a side of the rim further from the bridge of the frames.

In this example, two antenna arrays are provided. In other embodiments, only one antenna array is provided. In principle, some embodiments may be provided with more than two antenna arrays.

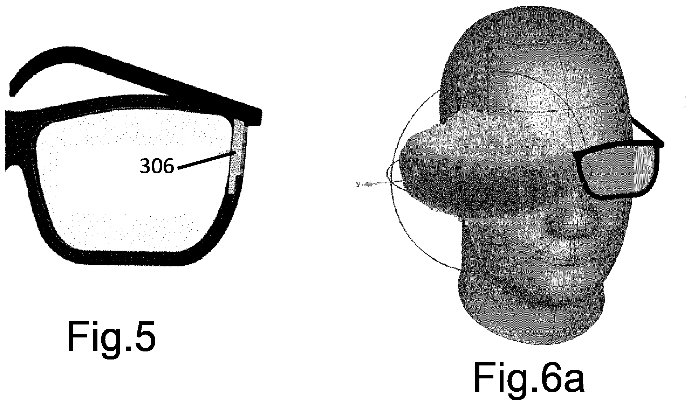

The two antenna arrays are placed on the outer vertical parts of the rims surrounding the lenses. In both cases, the antenna arrays extend along an axis generally parallel to the third axis. In this regard, reference is made to Figures 4 and 5 which show two alternate positions for the antenna arrays.

Referring first to Figure 4, the first antenna array can be seen on the side of the outer vertical part of the rims. The second antenna array would be similarly positioned on the opposite side of the rim.

Referring next to Figure 5, the second antenna array 306 can be seen on the front of the outer vertical part of the rims. The first antenna array would be similarly positioned on the opposite side of the rim.

The antenna arrays may alternatively be provided on the back of the outer vertical part of the rims, opposite the location illustrated in Figure 5.

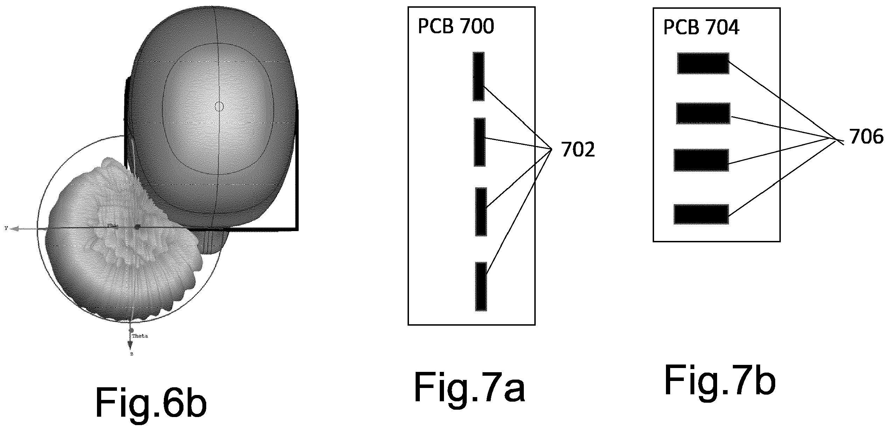

The generally vertical placement of the antenna array may avoid the need for beam steering, as it generates a radiation pattern covering the horizontal plane, as shown in Figure 6a and Figure 6b. Figure 6a schematically shows the radiation pattern when viewed from the front of a user wearing the eyeglasses. Figure 6b show the same radiation pattern when viewed from above the user's head.

It should be noted that the antenna array placement is as far away from the user's head as possible, which minimizes the power dissipated at the user (MPE). This may allow for a higher transmitted power. The antenna array is placed at or near the hinge/joint between the lens frame and the temple(s) to allow maximum power amplifier power output from transmitter circuitry.

The position of the antenna arrays of some embodiment may increase the efficiency of the antenna array, as less power is dissipated into the user.

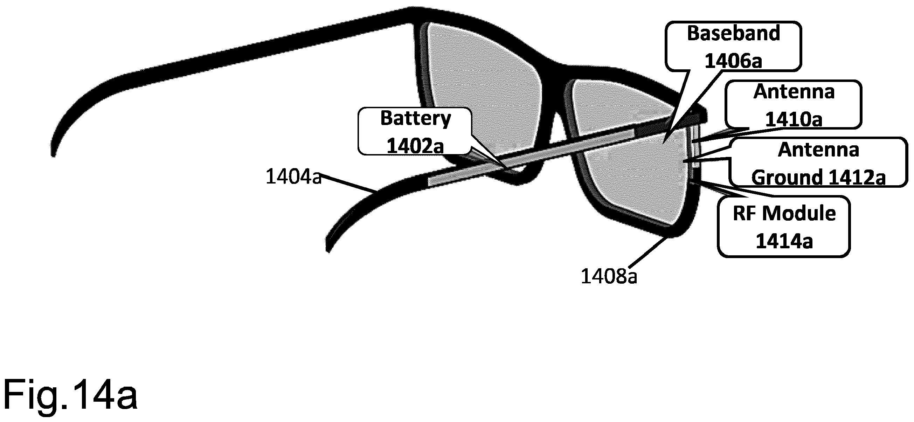

Reference is made to Figure 14a which shows a first example of where components of an apparatus may be provided on the eyeglasses. The apparatus may be considered to be a UE apparatus. The apparatus comprises a battery 1402a which is provided in the arm 1404a of the eyeglasses. The apparatus also comprises a baseband part 1406a which is arranged in the arm 1404a of the eyeglasses. The baseband part 1406a may be closer to the rim 1408a of the eyeglasses than the battery 1402a. The side of the rim 1416a of the glasses has the antenna array 1410a, an antenna ground 1412a and a radio frequency RF module 1414a. The antenna array 1410a, the antenna ground 1412a and a radio frequency RF module 1414a may be arranged in this order from the front of the rim to the rear, closer to the arm. The RF module may support transmitting and receiving. The antenna ground 1412a may be arranged between the antenna array 1410a and the RF module 1414a. Control apparatus such as shown in Figure 2 (excluding the transceiver part which is separately shown in Figure 14a) may be provided in suitable location on the eyeglasses such as between the battery and the baseband part.

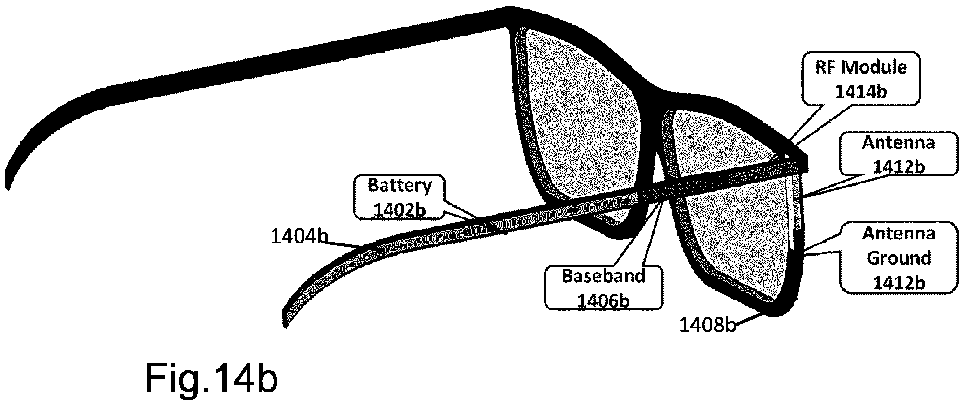

Reference is made to Figure 14b which shows a second example of where components of the apparatus may be provided on the eyeglasses. The battery 1402b is provided in the arm 1404b of the eyeglasses as is the baseband part 1406b and the radio frequency RF module 1414b. The radio frequency RF module 1414b is closer to the rim 1408b of the eyeglasses than the battery 1402b with the baseband part 1406 arranged between the battery 1402b and the radio frequency RF module 1414b. The side of the rim of the glass has the antenna array 1410b and the antenna ground 1412b. The antenna array 1410b and the antenna ground 1412b may be arranged in this order from the front of the rim to the rear, closer to the arm. Control apparatus such as shown in Figure 2 (excluding the transceiver part which is separately shown in Figure 14a) may be provided in suitable location on the eyeglasses such as between the battery and the baseband part.

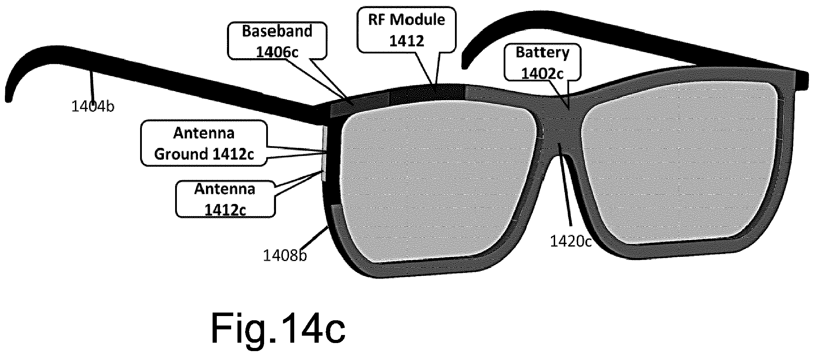

Reference is made to Figure 14c which shows a third example where components of the apparatus may be provided on the eyeglasses. The battery 1402c is provided in the bridge 1420c of the eyeglasses. The baseband part 1406c and the radio frequency RF module 1414c are provided in the upper part 1422c of the rim, that is above one of the lenses. The radio frequency RF module 1414b is further from the side of the rim of the eyeglasses than the baseband part 1406c. The side of the rim of the glass has the antenna array 1410c and the antenna ground 1412c. The antenna array 1410c and the antenna ground 1412c may be arranged in this order from the front of the rim to the rear, closer to the arm. Control apparatus such as shown in Figure 2 (excluding the transceiver part which is separately shown in Figure 14a) may be provided in suitable location on the eyeglasses such as between the battery and the radio frequency RF module.

Figures 14a to 14c show some examples of how components may be arranged on the eyeglasses. Other arrangement may be provided in other embodiments. In summary, some embodiments may provide a generally vertical placement of the antenna array on glasses. This may avoid the need for beam steering. The placement of the antenna array furthest away from the head may reduce MPE. This may mean that the allowed transmitted power may be increased.

In another example embodiment, the eyewear device may be a gaming headset which may have more space/volume available for the antenna array. Such game headset may also benefit from the position/location of the antenna array discussed in relation to the eyeglasses. The compact design or the antenna array may give rise to more space within a larger headset for example for battery space or other electronic parts/modules

In some embodiments, no UE beam steering is required per panel. This may mean no reference signals are needed for beam management. This may lead to a DL TPUT (throughput) improvement. This may lead to robustness with respect to head movements.

In some embodiments an increased maximum transmission power is required.

In some embodiments, a simpler and cheaper RF (radio frequency) front end may be provided since no phase shifters are needed.

Some embodiments may be compatible with some of the current 5G standardisation with the current standard having UE capability reporting the maximum number of receive beams (maxNumberRxBeam).

In the following examples, the antenna array has four antenna elements. This is by way of example only and the number of antenna elements may be two or more. The number of antenna elements may be more than four. The number of antenna elements may depend on the wavelengths being used and/or the available space. In some embodiments, the number of antennas may be between 2 and 10. However, in other embodiments, more than 10 antenna may be used.

The spacing between the monopole antennas is half of the electrical wavelength. The spacing between the monopole antennas could be less or larger than half a wavelength.

A monopole antenna length is a quarter of the wavelength. Other types of antennas may be used, such as patch antennas (quarter and half wavelength) and dipole antennas (half wavelength).

A first example of an antenna array is shown in Figure 7a. In this example, four antenna elements 702 are provided. The four antenna elements may be provided on a PCB (printed circuit board). The antenna elements may be monopole antenna elements. The monopole antenna elements may be integrated into a small PCB with some ground areas. Monopoles have a small real-estate, i.e. thin and elongate design which may be useful in some applications. The monopole antennas are arranged with their linear axes in line with one another and parallel to the third axis.

A second example of an antenna array is shown in Figure 7b. In this example, four antenna elements 706 are provided. The four antenna elements may be provided on a PCB (printed circuit board). The antenna elements may be monopole antenna elements. The monopole antenna elements may be integrated into a small PCB with some ground areas. The monopole antennas are arranged with their linear axes parallel with one another and perpendicular to the third axis.

In one modification to the arrangement of Figure 7b, the monopole antennas are arranged with their linear axes parallel with one another and angled with respect to the third axis. The angle may be any suitable angle. By way of example only, the angle may be 45 degrees.

In some embodiments, instead of a monopole, a patch array design may be used (where each element is then dual polarized). A patch design might require an increased thickness of the glass frame due to its intrinsic shape and dimensions, and therefore may be more suited to an eyewear device with a larger area available to support the antenna arrays.

As mentioned, some embodiments do not require beam steering. In some embodiments, the switching between the antenna arrays e.g., positioned on each side of the glasses is possible to provide switch diversity.

In some embodiments, the antenna arrays may be controlled to operate independently from one another, e.g. with switched diversity, where the antenna array with the best signal conditions are used for data transmission and reception, while the other antenna array is inactive.

In other embodiments, the antenna arrays may provide signal diversity. Signals from the different antenna arrays may be combined in the baseband (digital) domain, or two signal streams are received independently on each antenna array (MIMO - multiple input multiple output).

In other embodiments, only one antenna array is provided.

In some embodiments, to provide higher gain in the elevation, the antenna array may be controlled to activate a smaller number of elements to radiate with a broader beam.

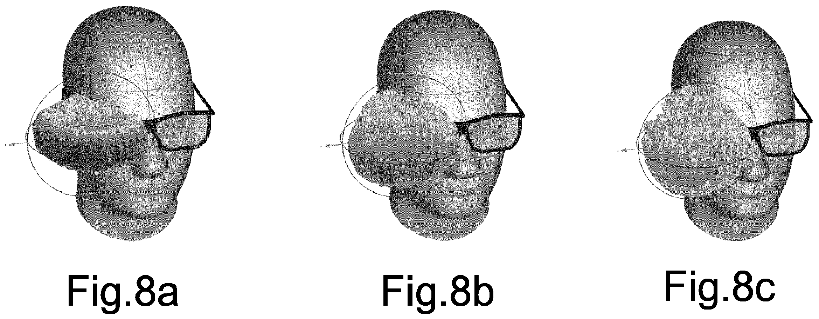

In this regard, reference is made to Figures 8a to 8c. In Figure 8a, all of the antenna elements of the array are active. In this example, the array has 4 antenna elements. Figure 8b, shows the case where 2 antenna elements are active and Figure 8c shows the case where only one antenna is active (from the center of the array). As can be seen there is improved elevation coverage (that is coverage in the vertical direction) with downscaling (that is reducing the number of active antenna). This may be at the price of a lower antenna gain.

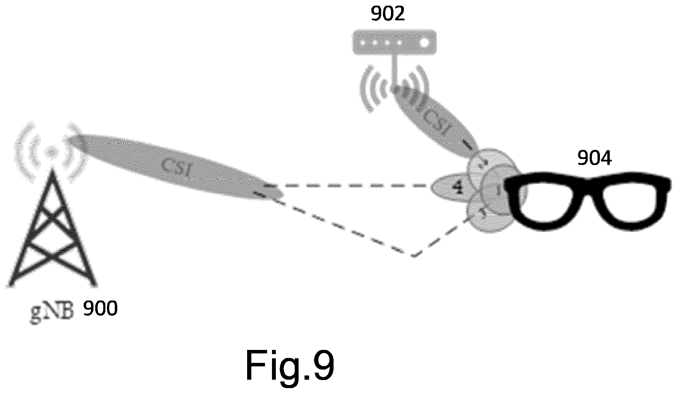

Even though in most of the cases the power comes from the azimuthal plane, some scenarios may lead to power coming from above (e.g., very close to the gNB or indoor with roof mounted access point) or from underneath the device (e.g., ground reflection). These scenarios are exemplified in Figure 9 which shows a base station 900 in azimuthal plane and a roof mounted wireless access node 902 which is above the eyeglasses 904. As can be seen, beams 3 and 4 receive the reference signal CSI (Channel State Information), for example CSI-RS, from the base station and beam 2 receives the reference signal CSI from the wireless access node. Thus, depending on the location of the access node (e.g., base station 900 or wireless access node 902 with respect to the antenna array will determine which beams should be used.

Some embodiments may configure the antenna array on the glasses to optimize beam gain depending on incoming power. The angle of arrival may not be known.

Some embodiments may control when downscaling is triggered.

Some embodiments may control which downscaling configuration to choose.

Some embodiments may control how many antenna elements to activate.

Some embodiments may control which elements to activate.

Such method is solved autonomously on the UE (that is the eyeglasses or XR device) in order to minimize the number of reference signals that the network needs to schedule. This may remove the need for aperiodic reference signals for UE beam alignment. This removal of this need for aperiodic or extra reference signals is avoided which would otherwise directly impact DL resources and DL achievable throughput.

Based on signal quality degradation (e.g., RSRP (reference signal receive power), SINR (signal to interference and noise ratio), and/or RSRQ (reference signal receive quality)), the eyewear device decides to activate a smaller number of antenna elements in order to direct most gain towards the incoming power direction.

The incoming direction is determined with delay differences per antenna element. The delay may be compared to a threshold to determine if the array is downscaled for 4 active elements to 2 or to only 1.

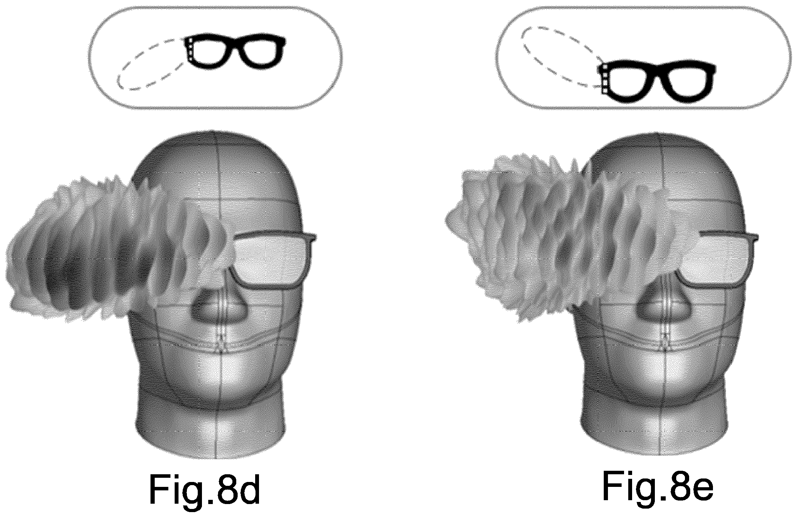

The choice of activated elements is not straightforward as elements at the bottom of the array will direct the power towards the top of the sphere. In this regard, reference is made to Figure 8d which shows the antenna pattern when only the uppermost antenna is activated. As can be seen, this directs the beam in a downwards direction. Reference is made to Figure 8e which shows the antenna pattern when only the lowermost antenna is activated. As can be seen, this directs the beam in an upwards direction.

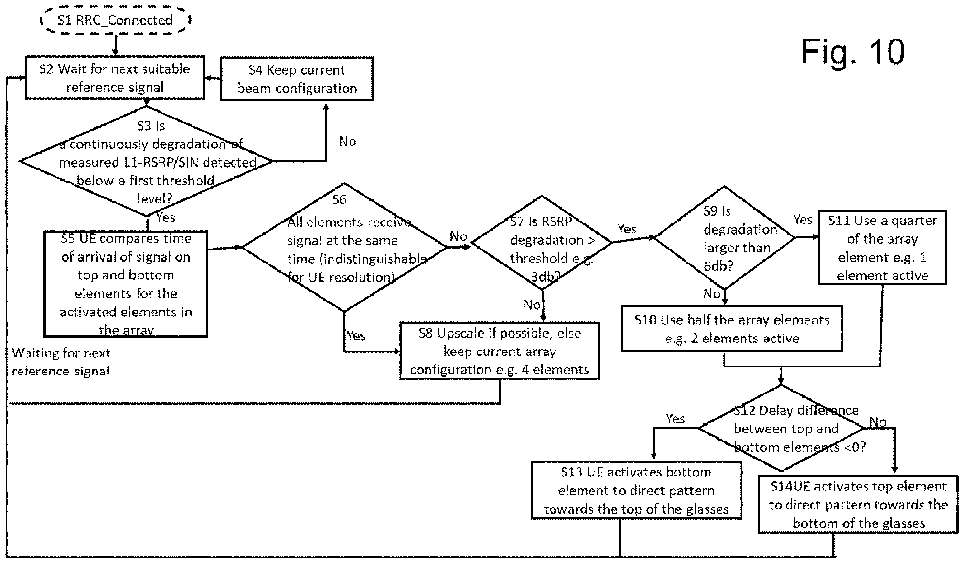

Reference is made of Figure 10 which shows a method of some embodiments. In S1, the apparatus is in a RRC connected mode.

In S2, it is determined if the next suitable reference signal has been received.

In S3, when the next suitable reference signal has been received, it is determined if there is a continuous degradation of measured L1- RSRP and/or SINR detected below a first threshold level.

If it is determined that there is not a continuous degradation of measured L1-RSRP and/or SINR detected below the first threshold level, then in S4, the current beam configuration is kept.

Step S4 is then followed by step S2.

If it is determined that there is a continuous degradation of measured L1- RSRP and/or SINR detected below the first threshold level, then in S5, the time of arrival of the signal at the top and bottom antenna elements of the activated elements of the antenna array are compared.

In S6, it is determined if the antenna elements receive the signal at the same time. This may be such that the UE cannot resolve time of arrival differences between the signal or that the differences are very small.

If it is determined if the antenna elements do not receive the signal at the same time, then the next step is S7.

If it is determined if the antenna elements do receive the signal at the same time, then the next step is S8.

In S7, a determination is made as to if the RSRP degradation is above a second threshold. By way of example, that degradation threshold may be 3dB or any other suitable threshold. This may be the change in RSRP over the last x sec. This is so that slow degradations of the RSRP may be determined.

If the RSRP degradation is not above the second threshold, then the next step is S8. In S8, the number of antennas used may be increased or upscaled if not all the antennas are used. If all the antennas are used then, that is unchanged, and the method loops back to S2 to wait for the next reference signal.

If the RSRP degradation is above the second threshold, then the next step is S9. In S9 a determination is made as to if the RSRP degradation is above a third threshold. The third threshold is higher than the second threshold. By way of example, that third threshold may be 6dB or any other suitable threshold,

If the RSRP degradation is not above the third threshold, then the next step is 10. In S10, the number of antennas used may be reduced. By way of example, the number of active antennas may be halved, for example. Where 4 antenna elements are provided in the array, the number of active antenna elements may be reduced to 2. The reduction in the number of antenna elements may depend on the number of antenna elements in the array. This may be followed by S12.

If the RSRP degradation is above the third threshold, then the next step is S11. In S11, the number of antennas used may be reduced by more than the reduction in step S10. For example, the number of active antenna elements may be quartered, for example. Where 4 antenna elements are provided in the array, the number of active antenna elements may be reduced to 1. The reduction in the number of antenna elements may depend on the number of antenna elements in the array. This may be followed by S12.

In S12, it is determined if the delay difference between the top and bottom elements is less than 0. This is to determine which of the antenna elements is selected.

If so, then in S13, the UE activates the bottom one or two elements (depending on the decision made in S10 or S11 as to the number of active antenna elements). This will direct the pattern towards the top of the glasses.

If not, then in S14, the UE activates the top one or two elements (depending on the decision made in S10 or S11 as to the number of active antenna elements.) This will direct the pattern towards the bottom of the glasses.

Steps S13 and S14 are followed by step S2.

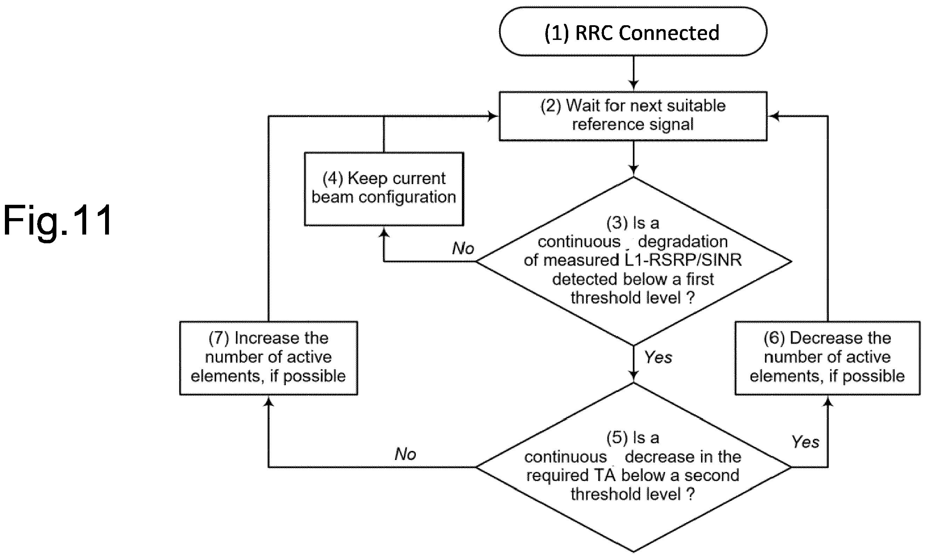

Reference is made to Figure 11 which shows another method of some embodiments. In this example, the downscaling may only be performed if the used Timing Advance (TA) value for UL is below a threshold. This may ensure that the device will not reduce the number of used antenna array elements when it is far from the gNB,

As referenced (1), the apparatus is in a RRC (Radio Resource Control) connected mode.

As referenced (2), the method comprises waiting for the next suitable reference signal.

As referenced (3), when the next suitable reference signal has been received, it is determined if there is a continuous degradation of the measure L1- RSRP and/or SINR detected below a first threshold level.

If not, as referenced (4), the current beam configuration is kept, and the method loops back to (2).

If so, as referenced (5), it is determined if there is a continuous decrease in the required TA below a second threshold level. In other embodiments, this may instead be determined based on the timing advance value.

If so, as referenced (6), the number of active antenna elements is decreased if possible, and the method loops back to (2). It should be noted that the aspects of the example method of Figure 11 may be used with aspects of the example method of Figure 10. Delay difference per antenna element in the antenna array and the change in TA may be used to control down-scaling.

Down-scaling reduces the antenna gain in the horizontal plane but increases the gain in the elevation plane. This may be advantageous as no beam steering is required. No dedicated beam alignment reference signal from the gNB may be required. This may help direct more power in elevation e.g., when the user is close to the gNB.

Thus, embodiments may provide a method using array scaling for beam alignment in an array without phase shifters.

Activation of the best element(s) while downscaling for beam steering may be based on delay difference between the array elements.

Embodiments may provide direct downscaling to the optimum array size depending on the link degradation.

Some embodiments may provide adaptable spherical coverage.

Some embodiments may provide beam steering without phase shifters or other complex and large antennas feed structures such as Butler Matrices.

Some embodiments may provide a simpler and cheaper RF front end, since no phase shifters are needed.

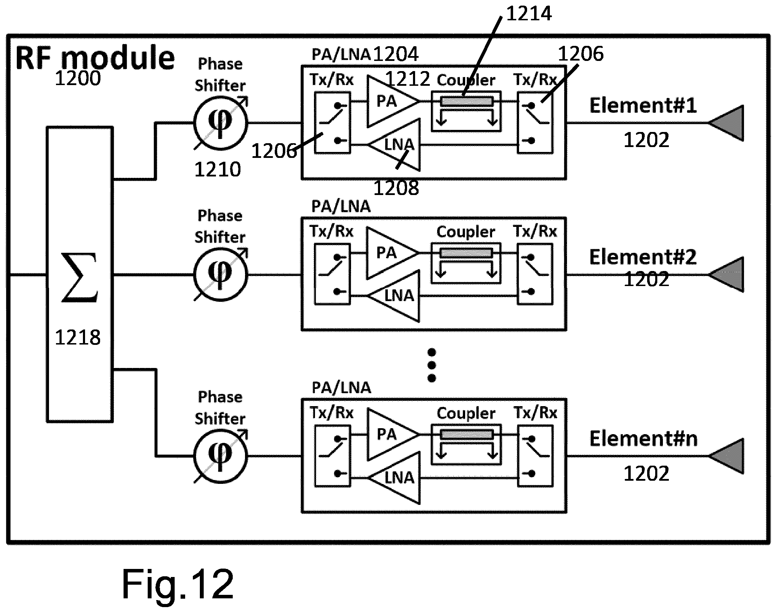

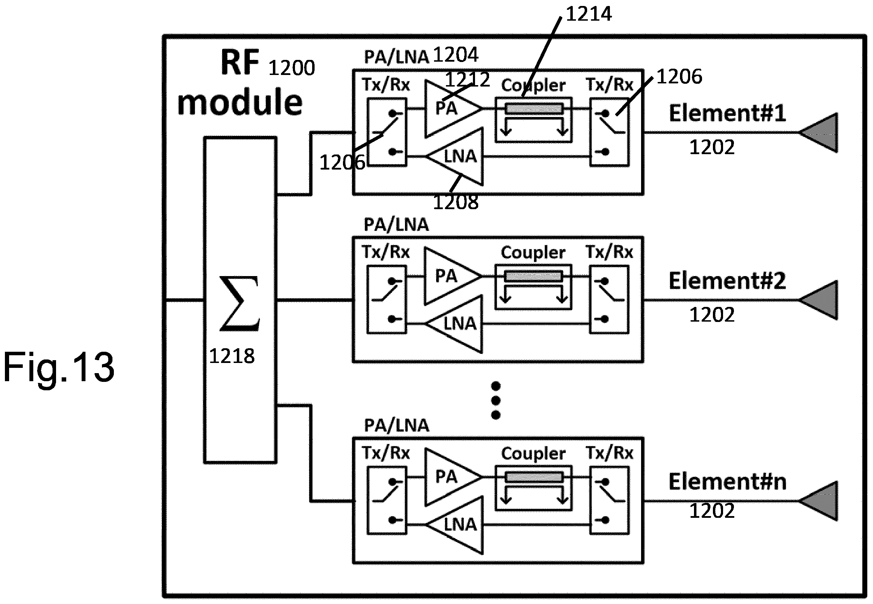

In this regard, reference is made to Figure 12 which shows a first RF module and Figure 13 which shows a second RF module. The RF module of Figure 13 omits the phase shifters of the RF module of Figure 12. The module of Figure 13 may be advantageously used in some embodiments to reduce cost and/or complexity of the RF module. The RF module of Figure 13 may be smaller than that of Figure 12 which may be advantageous when mounting on eyeglasses such as in some embodiments.

The RF module 1200 of Figure 12 comprises respective connections 1202 to the elements of the antenna array. A power amplifier/low noise amplifier PA/LNA block 1204 is provided for each antenna element. Each end of the PA/LNA block 1204 comprises a path switch 1206 which allows the PA/LNA 1204 to provide a transmit path to the antenna elements or a receive path from the antenna elements, as required. On the receive path, the output from the antenna element is passed to a LNA 1208 and provided to a respective phase shifter 1210. On the transmit path, the signal output from the phase shifter 1210 is passed via the path switch 1206 to the power amplifier 1212. The output of the power amplifier is provided to a coupler 1214 and the output from the coupler to the respective connection to an antenna element of the array. A splitter/summer block 1218 is provided. The splitter/summer block sums the received signals from each of the phase shifters. The splitter/summer block outputs the signal to be transmitted to each of the PA/LNA blocks.

Reference is made to Figure 13 which shows the RF module 1200 of some embodiments. Like reference numerals are used for like elements of Figure 12. As can be seen, no phase shifter is required in the arrangement of Figure 13. It should be noted that the splitter/summer block outputs the signal to be transmitted only to the respective PA/LNA block or blocks which are associated with an active antenna element.

One or more of the features in the example RF module may be provided external to "a module". A module may be considered to be a single component which can be bought from a manufacturer and soldered to a larger PCB or it could be designed and covered in a RF "shielding can".

In some embodiments, any of the components shown in these modules, e.g. a PA (Power Amplifier), could be external to the provided "module" and connected via connection pins or pads which are visible from the outside of the module.

As the UEs (glasses) do not need reference signals for per panel beam alignment, this may be signaled to the gNB.

With embodiments, an absolute estimation of the angle of arrival is not needed to align to the gNB. Alignment comes from down/up-scaling and requires the array to determine if the power is arriving from the top (roof) or the bottom (ground reflection). As such, for the array to choose where to direct the beam, it can use the delay difference between the top and bottom elements. Of course, more than two or all 4 elements in the array can be used but this may not provide a more accurate estimate. This may be a reliable method since the orientation of the glasses may not change very much in elevation (unlike e.g., a smartphone).

As an illustrative numerical example, the delay difference between top and bottom elements of a 1x4 array is 45 ps - 1.5 wavelength at 28 GHz.

In a simulation: For downscaling to 2 elements, using the elements at the bottom, which increased the antenna gain in a 45° upwards angle with 3.5 dB compared to the baseline choice of the two center elements. An improvement in antenna gain of more than 5 dB upwards can be achieved by comparing selecting the bottom element pair, than selecting the two top element pair. This is compared to using the center elements as a reference.

In a simulation: For downscaling to a single element, using the element at the bottom, may increase the antenna gain in a 50° upwards angle with 4.3 dB compared to the baseline choice of one of the two center element. An improvement in antenna gain of more than 7.8 dB can be achieved by comparing selecting the bottom element, to selecting the top element. This is compared to using the center elements as a reference.

In some embodiments, Tx and Rx radiation patterns may be symmetrical.

Thus, up/down-scaling is used as a beam alignment strategy. It relates to the distance to a gNB (i.e., close by gNB signals will tend to come from above hence the array will use a downscaled configuration, whereas far away gNB signals will come on the azimuth hence the array will use an upscaled configuration). The advantage of using up/down-scaling as a beam alignment mechanism may enable good beam alignment. Using the time difference on the individual array elements may avoid the need for dedicated reference signals.

Reference is made to Figure 15 which shows a method of some embodiments.

This method may be performed by an apparatus. The apparatus may be in or be eyeglasses or an extended reality device.

The apparatus may comprise suitable circuitry for providing the method.

Alternatively or additionally, the apparatus may comprise at least one processor and at least one memory storing instructions that, when executed by the at least one processor cause the apparatus at least to provide the method below.

The apparatus may be such as discussed in relation to Figure 2.

The method may be provided by computer program code or computer executable instructions.

The method may comprise as referenced A1, determining based on signal quality which one or more of the antenna elements is to be active.

It should be appreciated that the method outlined in Figure 15 may be modified to include any of the previously described features.

Computer program code may be downloaded and stored in one or more memories of the relevant apparatus or device.

Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit such as a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiments of this disclosure. However, various modifications and adaptations may become apparent to those skilled in the relevant arts in view of the foregoing description, when read in conjunction with the accompanying drawings and the appended claims. Indeed, there are further embodiments comprising a combination of one or more embodiments with any of the other embodiments previously discussed. The scope of protection sought for some embodiments of the disclosure is set out by the claims. The embodiments and features, if any, described in this specification that do not fall under the scope of the claims are to be interpreted as examples useful for understanding various embodiments of the disclosure. It should be noted that different claims with differing claim scope may be pursued in related applications such as divisional or continuation applications.

## Claims

1. Eyewear device comprising:
an antenna array comprising at least two antenna elements which are arranged along a first axis, the first axis being substantially perpendicular to a second axis of the eyewear device, wherein when in use, the second axis is parallel to a line passing through a centre of both eyes of a wearer of the eyewear device.

2. The eyewear device as claimed in claim 1, wherein a linear axis of each of the antenna elements extend along the first axis.

3. The eyewear device as claimed in claims 1 or 2, wherein a linear axis of each of the antenna elements are arranged parallel to one another.

4. The eyewear device as claimed in any preceding claim, comprising control apparatus, said control apparatus configured to control which one or more of the antenna elements are active.

5. The eyewear device as claimed in claim 4, wherein the control apparatus is configured to determine which one or more of the antenna elements is to be active based on signal quality.

6. The eyewear device as claimed in claim 5, wherein the signal quality is one or more of reference signal received power, signal to interference and noise ratio, or reference signal received quality.

7. The eyewear device as claimed in claim 4, 5 or 6, wherein the control apparatus is configured to reduce the number of active antenna elements in response to a reduction in signal quality.

8. The eyewear device as claimed in claim 7, wherein the control apparatus is configured to reduce the number of active antenna elements only when a timing advance value is below a timing advance threshold value.

9. The eyewear device as claimed in any of claims 4 to 8, wherein the control apparatus is configured to select which of the antenna elements is active based on a delay difference between at least two of the antenna elements.

10. The eyewear device as claimed in any of claims 6 to 9, wherein the control apparatus is configured to select which of the antenna elements is active based on a delay difference between antenna elements at each end of the antenna array.

11. The eyewear device as claimed in any preceding claim, wherein the eyewear device comprises a head mounted display or eyeglasses.

12. The eyewear device as claimed in claim 11, where the eyeglasses have a frame and first and second arms mounted to opposite side edges of the frame, the antenna array being mounted on one of the side edges of the frame.

13. A method of controlling the antenna array of the eyewear device as claimed in any preceding claim, the method comprising:
determining based on signal quality which one or more of the antenna elements is to be active.

14. The method as claimed in claim 13, comprising determining that the signal quality is reduced and in response reducing a number of active antenna elements in the antenna array.

15. The method as claimed in claim 14, comprising reducing the number of active antenna elements only when a timing advance value is determined to be below a timing advance threshold value.
